**Europäisches Patentamt**

**European Patent Office**

**Office européen des brevets**

(19)

(11) Veröffentlichungsnummer: **0 263 856**

**B1**

(12) **EUROPÄISCHE PATENTSCHRIFT**

(45) Veröffentlichungstag der Patentschrift: **11.07.90**

(51) Int. Cl.⁵: **F 16 H 47/04**

(21) Anmeldenummer: **87902383.6**

(22) Anmeldetag: **08.04.87**

(86) Internationale Anmeldenummer:
**PCT/DE87/00157**

(87) Internationale Veröffentlichungsnummer:
**WO 87/06316 22.10.87 Gazette 87/23**

(54) **STUFENLOSES VERZWEIGUNGSGETRIEBE INSBESONDERE FÜR KRAFTFAHRZEUGE.**

(30) Priorität: **10.04.86 DE 3612037**
**20.03.87 DE 3709191**

(43) Veröffentlichungstag der Anmeldung:
**20.04.88 Patentblatt 88/16**

(45) Bekanntmachung des Hinweises auf die
Patenterteilung:
**11.07.90 Patentblatt 90/28**

(84) Benannte Vertragsstaaten:
**DE FR GB IT SE**

(73) Patentinhaber: **Meyerle, Michael**
**Kiefernweg 9**
**D-7996 Meckenbeuren (DE)**

(72) Erfinder: **Meyerle, Michael**
**Kiefernweg 9**
**D-7996 Meckenbeuren (DE)**

(74) Vertreter: **Münich, Wilhelm, Dr. et al**
**Kanzlei Münich, Steinmann, Schiller**
**Willibaldstrasse 36/38**
**D-8000 München 21 (DE)**

(56) Entgegenhaltungen:
**EP-A- 081 696**
**EP-A- 105 515**
**EP-A-0 143 365**
**WO-A-87/01781**
**WO-A-87/01782**
**DE-A-2 716 960**
**DE-A-2 758 659**
**FR-A-2 412 760**
**FR-A-2 412 761**
**GR-A-2 049 843**

Courier Press, Leamington Spa, England.

**Beschreibung**

Die Erfindung bezieht sich auf ein stufenloses Verzweigungsgetriebe für Kraftfahrzeuge mit wenigstens drei Vorwärtsfahrbereichen nach dem jeweiligen Oberbegriff der Ansprüche 1 bzw. 2.

Ein stufenloses Verzweigungsgetriebe gemäß dem Oberbegriff des Anspruchs 1 ist aus der EP-A-0 143 365 bekannt. Es weist ein vierwelliges Summierungsplanetengetriebe sowie eine oder mehrere nachgeordnete Planetengetriebeeinheiten auf. Die zweite Planetengetriebeeinheit ist dreiwellig ausgebildet und hat drei bis fünf Schaltblöcke mit jeweils mehreren Schaltmöglichkeiten zum Schalten von mindestens fünf Vorwärtsfahrbereichen und einem Rückwärtsfahrbereich. Mehrere Kupplungen sind innerhalb eines jeden Schaltbereichs belastet und zu schalten. Dementsprechend sind Schalt- und Steuerungsaufwand entsprechend hoch. Aus Fig. 5 und dem dazugehörigen Text der vorerwähnten Druckschrift ist ferner ein stufenloses Verzweigungsgetriebe bekannt, das als stufenlosen Wandler eine mechanische Vorrichtung, nämlich ein Umschlingungsgetriebe, aufweist. Die Eingangsleistung wird bei dieser Ausführung des Getriebes in einem Planetendifferential auf zwei Leistungszweige aufgeteilt, wobei ein Leistungszweig eingangsseitig über ein Glied des Planetendifferentials und das Umschlingungsgetriebe auf ein Ausgangsglied des Planetendifferentials geführt wird.

Aus der EP-A-0 105 515 gemäß dem Oberbegriff des Anspruchs 2 ist ein Leistungsverzweigungsgetriebe, das zwei Planetengetriebeeinheiten und mehrere Kupplungen zum Schalten von maximal drei Vorwärtsfahrbereichen aufweist, bekannt. Bei diesem Getriebe ist die ausgangsseitige Planetengetriebeeinheit über parallel zur Antriebswelle versetzt angeordnete Wellen mit den eingangsseitig angeordneten, stufenlosen Wandlergetriebeeinheiten des Umschlingungsgetriebes verbunden. Die Anordnung der einzelnen Getriebekomponenten erfordert großen Aufwand hinsichtlich des Bauraums. Mit dem bekannten Getriebe ist eine Modulbauweise kaum möglich.

Der Erfindung liegt die Aufgabe zugrunde, ein stufenloses Verzweigungsgetriebe für Kraftfahrzeuge mit wenigstens drei Vorwärtsfahrbereichen zu schaffen, bei dem möglichst kleine stufenlose Wandlereinheiten in hydrostatischer oder mechanischer Ausführung verwirklicht werden können, eine einfache Schaltart der Bereichsschaltungen möglich ist, und fahrzeugfreundliche, kompakte Bauformen für verschiedene Anwendungen ausführbar sind.

Diese Aufgabe wird erfindungsagemäß nach der Lehre des Anspuchs 1 bzw. gelöst.

Die Erfindung wird an Ausführungsbeispielen anhand von Zeichnungen erläutert. Es zeigen:

Fig. 1 ein erstes Ausführungsbeispiel in schematischer Darstellung mit hydrostatischem Wandler, mit vier Vorwärtsfahrbereichen und einem Rückwärtsfahrbereich (weiter, wie auf Seite 2 unten der internationalen Patentanmeldung PCT/DE87/157 — WO 87/06316).

Fig. 2 ein zweites Ausführungsbeispiel mit einem Umschlingungsgetriebe und ebenralls vier Vorwärtsfahrbereichen und einem Rückwärtsfahrbereich — schematisch.

Fig. 3 ein weiteres Ausführungsbeispiel mit hydrostatischem Wandler mit vier Vorwärtsfahrbereichen und zwei Rückwärtsbereichen.

Fig. 4 ein viertes Ausführungsbeispiel mit hydrostatischem Wandler, vier Vorwärtsfahrbereichen und einem Rückwärtsbereich — schematisch.

Fig. 5 ein fünftes Ausführungsbeispiel mit hydrostatischem Wandler, vier Vorwärtsfahrbereichen und einem Rückwärtsbereich — schematisch.

Fig. 6 ein Ausführungsbeispiel des Summierungsplanetengetriebes.

Fig. 7 ein weiteres Ausführungsbeispiel des Summierungsplanetengetriebes.

Fig. 8 ein weiteres Ausführungsbeispiel mit parallel versetzt angeodnetem Hydrostatgetriebe und Summierungsplanetengetriebe mit den Bereichskupplungen und der zweiten Planetengetriebeeinheit.

Fig. 9 ein Ausführungsbeispiel mit parallel versetzt angeordneter zweiten Planetengetriebeeinheit und den Bereichskupplungen mit Achsdifferential, z.B. für einen PKW-Querantrieb.

Fig. 10 eine Getriebeausführung mit parallel versetztem Hydrostatgetriebe.

Das Verzweigungsgetriebe gemäß der Erfindung besteht aus einem eingangsseitig angeordnetem stufenlosen Wandler 40; 140 einem vierwelligen Summierungsplanetengetriebe 4; 104; 204; 304; 404; 504 und einer zweiten Planetengetriebeeinheit 105; 205; 305; 405. Das Summierungsplanetengetriebe ist mit einer ersten Welle 53 mit der Antriebswelle 2 und einer Primäreinheit A; C, die zweite Welle 19 mit der Sekundäreinheit B; D ständig verbunden. Die dritte und vierte Welle des Summierungsplanetengetriebes 31, 32 können wechselweise, je nach dem geschalteten Bereich, mit der zweiten Planetengetriebeeinheit 105; 205; 305; 405 durch Schließen der Kupplungen 11; 12; 13; 15; 16 bzw. 35, 36; 38; 66 wechselweise in Triebverbindung gebracht werden.

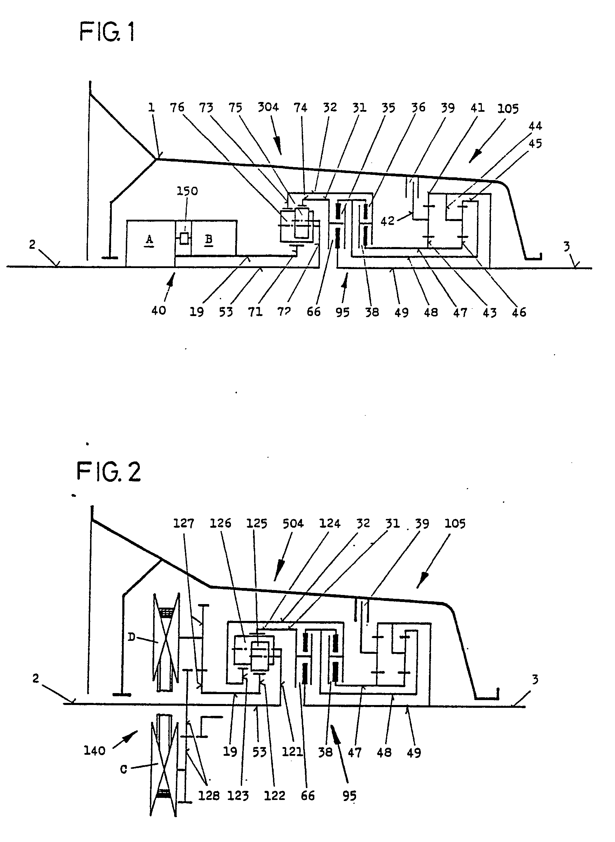

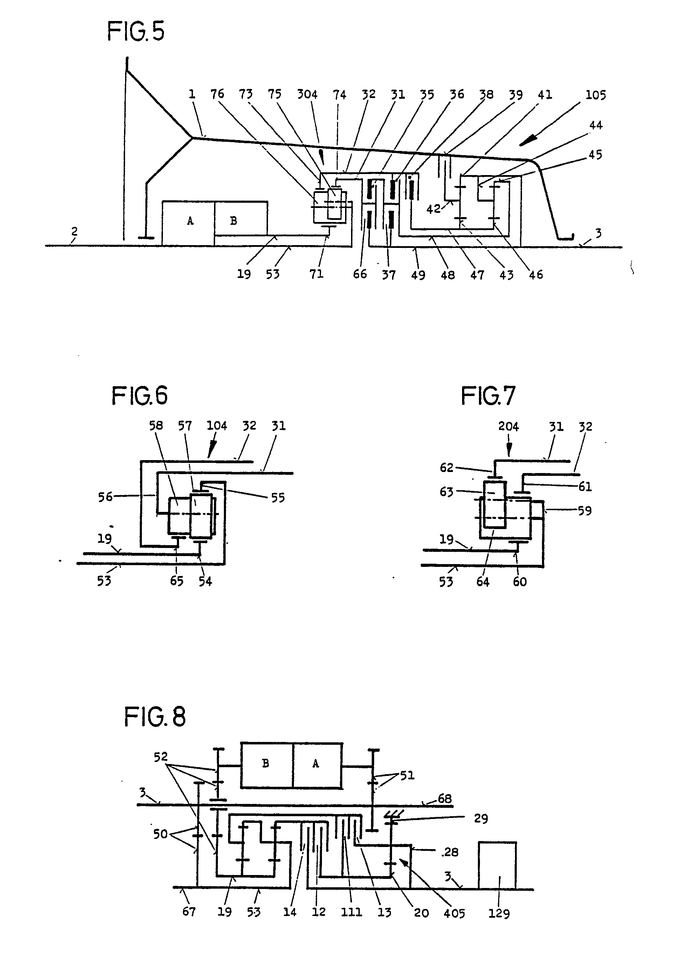

Die eingangsseitig aufgeteilte Leistung in einen variablen Übersetzungszweig und in einen nichtvariablen Übersetzungszweig wird im Summierungsplanetengetriebe 4; 104; 204; 304; 404; 504 aufsummiert und über die dritte Welle 31 bzw. vierte Welle 32 über entsprechende Kupplungen 69; 95; 98 auf die zweite Planetengetriebeeinheit 105; 205; 305; 405 und die mit ihr fest verbundene Abtriebswelle 3 übertragen. Das Summierungsplanetengetriebe 4; 104; 204; 304; 404; 504 kann, wie in den Figuren 1, 2, 3, 4, 5, 6 und 7 dargestellt, verschiedenartig ausgebildet werden. Auch die zweite Planetengetriebeeinheit 105; 205, 305, 405 ist verschiedenartig ausführbar, wie in den Figuren 1, 3, 4 und 8 dargestellt, wobei eine Welle 41, 44; 28; 91 ständig mit der Abtriebswelle 3 verbunden ist. Die Getriebeausführung nach Figur 8 besitzt eine zweite Planetengetriebeeinheit in dreiwelliger Ausführung — Sonnenrad 20, Steg 28, Hohlrad 29, der zusätzlich eine Rückfahreinrichtung 129, z.B. als Wendegetriebe zugeordnet ist. Eine Welle der zweiten Planetengetriebeeinheit, Steg 28, ist mit einem. Glied einer Bereichskupplung 13, mit einem weiteren Glied einer Bereichskupplung 14, sowie mit der Abtriebswelle 3 ständig verbunden.

Die Getriebeausführung nach Figur 1 besitzt vier leistungsverzweigte Vorwärtsfahrbereiche und einen leistungsverzweigten Rückwärtsfahrbereich. Der stufenlose Wandler 40 besteht aus einer hydrostatischen Primäreinheit A verstellbaren Volumens und einer hydrostatischen Sekundäreinheit B, vorzugsweise konstanten Volumens. Das Verzweigungsgetriebe 304 ist so ausgebildet, daß innerhalb jedem Schaltbereich die volle positive und negative Verstellung des Hydrostaten ausnutzbar ist, d.h. die Schaltungen finden an den jeweiligen Stellgrenzen des Hydrostatgetriebes statt. Das Kupplungspaket 95 besitzt vier Schaltkupplungen 35, 36, 38 und 66. Im Kupplungspaket 95 sind jeweils zwei Kupplungen übereinander angeordnet, Kupplung 66 und 35 bzw. 38 und 36, wodurch eine sehr kompakte Bauweise dieser Baueinheit erzielt wird. Die zweite planetengetriebeinheit 105 ist vierwellig ausgebildet.

Das Summierungsplanetengetriebe 304 besteht aus einem Sonnenrad 71, einem Steg 72, einem Hohlrad 73 und einem weiteren Hohlrad 74, sowie aus erste Planetenräder 76 und zweite Planetenräder 75, die ineinander eingreifen und gemeinsam auf dem Steg 72 gelagert sind. Die erste Welle 53 des Summierungsplanetengetriebes ist mit dem Steg 72 verbunden. Die zweite Welle 19 des Summierungsplanetengetriebes steht mit einem Sonnenrad 71 in Verbindung und greift in erste Planetenräder 76 ein. Die dritte Welle 31 des Summierungsplanetengetriebes 304 bildet das Hohlrad 74 und greift in zweite Planetenräder 75 ein. Die vierte Welle 32 des Summierungsplanetengetriebes steht mit dem Hohlrad 73 in Verbindung und kämmt mit den ersten Planetenrädern 76. Bei dieser Ausführung des Summierungsplanetengetriebes 304 ist die vierte Welle 32 außen angeordnet.

Die zweite Planetengetriebeeinheit 105 ist vierwellig ausgebildet und besteht aus zwei Planetengetriebestufen 46, 44, 45 bzw. 43, 42, 41. Die erste Welle 48 ist mit dem Hohlrad 45 der ersten Planetengetriebestufe, die zweite Welle 47 mit beiden Sonnenrädern 43, 46 beider Planetengetriebestufen verbunden; die dritte Welle 49 ist mit der Abtriebswelle, sowie dem Steg 44 der ersten Planetengetriebestufe und dem Hohlrad 41 der zweiten Planetengetriebestufe in ständiger Verbindung. Der Steg 42 bildet die vierte Welle und steht in Verbindung mit einem Glied der Kupplung bzw. Bremse 39.

Schaltkombination der Getriebeausführung nach Figur 1:

Im ersten Fahrbereich ist die Kupplung 35 geschlossen, um eine Triebverbindung zwischen der dritten Welle 31 des Summierungsplanetengetriebes und der zweiten Welle 48 der zweiten Planetengetriebeeinheit 105 herzustellen. Gleichzeitig ist die Kupplung bzw. Bremse 39 geschlossen, um den Steg 42 der zweiten Planetengetriebeeinheit mit dem Gehäuse 1 zu verbinden.

Im zweiten Schaltbereich ist die Kupplung 36 geschlossen, wodurch die vierte Welle 32 des Summierungsplanetengetriebes mit der ersten Welle 48 der zweiten Planetengetriebeeinheit verbunden ist, wobei ebenfalls die Kupplung 39, wie im Schaltbereich 1 geschlossen bleibt.

Im dritten Schaltbereich ist die dritte Welle 31 des Summierungsplanetengetriebes über die Kupplung 66 mit der dritten Welle 49 der zweiten Planetengetriebeeinheit verbunden, die Kupplung 3 bleibt dabei geschlossen, wobei die Bremse bzw. Kupplung 39 geöffnet ist. Innerhalb dem dritten Schaltbereich fließt die aufsummierte Leistung über die dritte Welle 31 des Summierungsplanetengetriebes über die Kupplung 66 und die dritte Welle 49 des zweiten Planetengetriebes direkt auf die Abtriebswelle 3. Durch die geschlossenen Kupplung 36 wird die erste Welle 48 der zweiten Planetengetriebeeinheit lastlos mit der vierten Welle 32 des Summierungsplanetengetriebes mitgeführt, wodurch eine kontrollierte Drehzahlführung aller Glieder des Summierungsplanetengetriebes, sowie der zweiten Planetengetriebeeinheit erzielt wird und an den Bereichsschaltstellen Synchronlauf der betreffenden Kupplungselemente gegeben ist.

Im vierten Schaltbereich werden alle Glieder der zweiten Planetengetriebeeinheit blockgeschaltet, indem die Kupplung 36 geschlossen bleibt und durch Schließen der Kupplung 38 die erste und die zweite Welle der zweiten Planetengetriebeeinheit miteinander verblockt werden. Die Leistung fließt in diesem Schaltbereich über die vierte Welle 32 des Summierungsplanetengetriebes und wird so über beide Wellen 47 und 48 der zweiten Planetengetriebeeinheit auf die Abtriebswelle 3 übertragen. Alle Schaltungen finden, wie bei allen anderen Getriebeausführungen, bei Synchronlauf der entsprechenden Kupplungsglieder statt.

Im Rückwärtsbereich ist die zweite Welle 47 der zweiten Planetengetriebeeinheit 105 mit der vierten Welle 32 des Summierungsplanetengetriebes 305 über die Kupplung 38 und die Bremse 39 mit dem Gehäuse 1 verbunden.

Das Verzweigungsgetriebe nach Ausführung Figur 2 ist weitgehend identisch mit der Ausführung nach Figur 1. Sie unterscheidet sich im wesentlichen durch eine andere Art des stufenlosen Wandlers 140, der hier ein Umschlingungsgetriebe darstellt und durch eine andere Summierungsplanetengetriebeeinheit 504. Die Primäreinheit C ist mit der Antriebswelle 2, sowie einer ersten Welle 53 des Summierungsplanetengetriebes 504 ständig verbunden. Die Sekundäreinheit D steht mit der zweiten Welle 19 des Summierungsplanetengetriebes 504 in ständiger Verbindung. Das Summierungsplanetengetriebe 504 ist so ausgebildet, daß innerhalb eines jeden Schaltbereiches möglichst der volle Verstellbereich des Wandlers 140 ausnutzbar ist, d.h. daß die Bereichsschaltungen am jeweiligen Ende der Verstellgrenzen stattfinden.

Das Umschlinunsgetriebe 14 ist nicht wie das Hydrostatgetriebe 4C durch Null verstellbar, sondern besitzt einen Verstellbereich in eine Drehrichtung in der Größenordnung von etwa 4 bis 6. Das Summierungsplanetengetriebe 504 ist so ausgebildet, daß bei diesen Verstellverhältnissen die dritte und vierte Welle 31 u. 32 des Summierungsplanetengetriebes 504 innerhalb den Schaltbereichen gleiche Drehzahlverhältnisse, wie bei Getriebeausführung Fig. 1 mit hydrostatischem Wandler 4C, gegeben sind. Das Summierungsplanetengetriebe 504 besitzt hierfür folgende Ausführungsform:

Die erste Welle 53 ist mit einem Steg 21 verbunden, auf dem ineinandergreifende erste und zweite Planetenräder 125 und 126 gelagert sind, wobei die ersten Planetenräder 125 in ein Sonnenrad 122 eingreift, das mit der zweiten Welle 19 des Summierungsplanetengetriebes verbunden ist, die dritte Welle 31 mit einem Hohlrad 124, das in zweite Planetenräder 126 greift und die vierte Welle 32 mit einem Sonnenrad 123 verbunden ist, das ebenfalls mit den zweiten Planetenrädern 126 in Triebverbindung steht.

Der Schaltablauf der Getriebeausführung nach Figur 2 ist mit der Ausführung nach Figur 1 identisch.

Die Primäreinheit C kann je nach gewünschter Bauform des Getriebes unmittelbar mit der Antriebswelle 2 verbunden sei oder über eine Stirnradstufe 128. Die Sekundäeinheit D des Umschlingungsgetriebes 140 kann ebenfalls gleichachsig mit der zweiten Welle 19 des Summierungsplanetengetriebes angeordnet sein oder versetzt, wie dargestellt über eine Stirn, radstufe 127 verbunden werden.

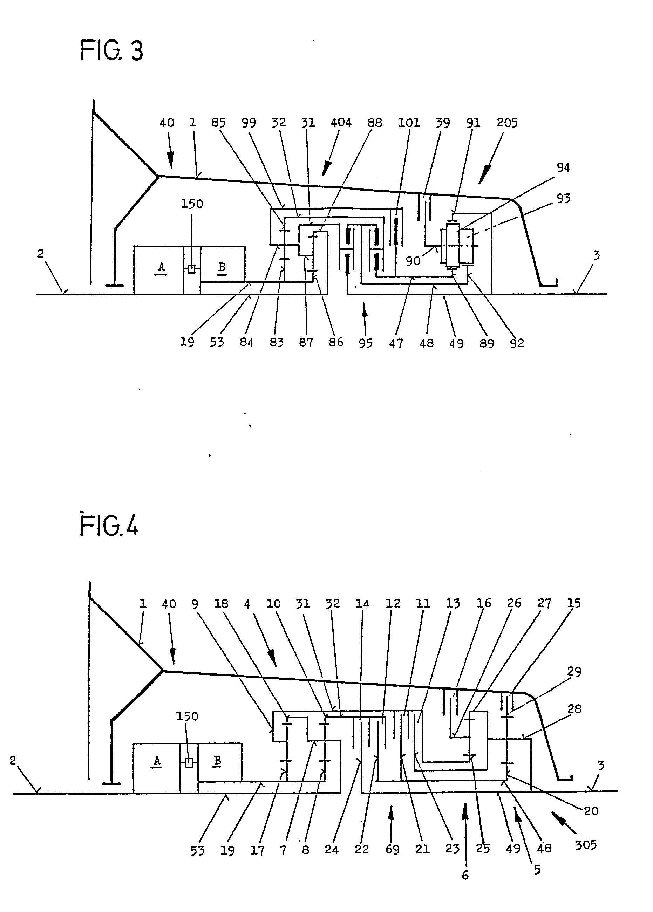

Das Verzweigungsgetriebe nach Figur 4 besitzt ebenfalls vier Vorwärtsfahrbereiche und einen Rückwärtsfahrbereich Im ersten Fahrbereich ist die dritte W. 31 des Summierungsplanetengetriebes 4 über die Kupplung 11 mit der ersten Welle, dem Sonnenrad 20 der zweiten Planetengetriebeeinheit 305 verbunden, wobei gleichzeitig das Hohlrad 29 durch Schließen der Kupplung bzw. Bremse 15 gehäusefest ist. Im zweiten Fahrbereich ist die vierte Welle 32 des Summierungsplanetengetriebes 4 über die Kupplung 12 ebenfalls mit der ersten Welle, dem Sonnenrad 20 der zweiten Planetengetriebeeinheit 305 gekoppelt bei geschlossener Kupplung 15. Durch die Kupplung 13 wird im dritten Fahrbereich die dritte Welle 31 des Summierungsplanetengetriebes mit der dritten Welle, dem Steg 28 der zweiten planetengetriebeeinheit verbunden. Die Kupplung 14 verbindet im vierten Fahrbereich die vierte Welle 32 des Summierungsplanetengetriebes ebenfalls mit der dritten Welle, dem Steg 28 der zweiten Planetengetriebeeinheit, die gleichzeitig mit der Abtriebswelle 3 verbunden ist. Alle Schaltungen werden bei Synchronlauf der entsprechenden Kupplungselemente vollzogen.

Die zweite Planetengetriebeeinheit 305 besitzt für den Rückwärtsfahrbereich eine zusätzliche Planetengetriebestufe 6, die durch Schließen einer Bremse bzw. Kupplung 16 den Steg 26 mit dem Gehäuse 1 verbindet und dadurch eine Triebverbindung der dritten Welle 31 des Summierungsplanetengetriebes 4 mit dem Sonnenrad 25 und dem Hohlrad 27 mit der Abtriebswelle 3 herstellt.

Dieses Getriebesystem besitzt vier leistungsverzweigte Vorwärtsfahrbereiche und einen leistungsverzweigten Rückwärtsfahrbereich. In jedem Fahrbereich ist das Hydrostatgetriebe 40 in seinem maximalen positiven und negativen Verstellbereich voll ausnutzbar. Dies bedeutet, daß eine sehr hohe Getriebeeckleistung erzielt wird bzw. daß mit sehr kleinen Hydrostatgrößen bzw. mit einem kleinen stufenlosen Wandler 40; 140 auskommt zugunsten eines niedrigen Leistungsgewichtes und -Volumens, sowie entsprechend niedrige Hydrostatleistungsanteile auftreten zugunsten des Wirkungsgrades.

Ein besonderer Vorteil dieser Erfindung besteht darin, daß gegenüber einem bekannten Getriebe dieser Art nach DE-C- 31 47 447 (EP-A- 81696) keine separate Anfahrkupplung zwischen Motor und Getriebe erforderlich ist. Bei diesem Getriebesystem kann sehr vorteilhaft der Anfahrvorgang über eine ohnehin im Getriebe integrierte Kupplung bzw. Bremse 39 durch ein Steuer- bzw. durch ein Regelsignal, z.B. aus der Motordrehzahl oder/und einem lastabhängigen Signal oder/und einem Signal aus, z.B. manueller Betätigung mit kontinuierlichem Kupplungsdruck angesteuert werden.

Alternativ ist es bei diesem Getriebesystem aber auch möglich, eine Anfahrkupplung zwischen Motor und Getriebe zu schalten in Form einer Reibungskupplung oder einer Flüssigkeitskupplung oder einer, mit einer Flüssigkeitskupplung kombinierten Reibungskupplung als Überbrückungskupplung. Eine zwischen Motor und Getriebe geschaltete Anfahrkupplung ist dann sinnvoll und zweckmäßig, wenn es sich um ein Fahrzeug handelt, das außergewöhnliche Anforderungen an die Anfahrkupplung stellen, was insbesondere bei Schwerfahrzeugen, wie Omnibussen oder Nutzkraftfahrzeugen der Fall sein kann.

Wird die im Getriebe integrierte Kupplung bzw. Bremse 39 als Anfahreinrichtung verwendet, so hat diese die Aufgabe, innerhalb dem Schließvorgang den ersten Übersetzungsbereich bis hin zu einem bestimmten definierten Übersetzungspunkt X zu überbrücken. Der Übersetzungspunkt X entspricht einer gewissen Mindestübersetzung bzw. Mindesgeschwindigkeit, der z.B. mit der Übersetzung eines ersten Ganges eines Stufengetriebes zu vergleichen ist. Die Kupplung bzw. Bremse 39 ist in diesem Fall als Reibungskupplung ausgelegt und entsprechend dimensioniert. Die stufenlose Regelung beginnt ab dem Übersetzungspunkt X bis zur Endübersetzung bzw. zur Endgeschwindigkeit. Im Hinblick auf ein weiches angenehmes Anfahrverhalten wird der Kupplungsdruck innerhalb des Schließvorganges kontinuierlich moduliert, wie bereits erwähnt, z.B.

durch ein Signal aus der Motordrehzahl oder/und einem lastabhängigen Signal oder/und einem aus der Betätigung resultierendem manuellen Signal, was z.B. dem Loslassen einer Fahrkupplung entsprechen kann. Bei Getriebeausführungen mit einer zweiten planetengetriebeeinheit nach Ausführung 105 und 205 ist die Anfahreinrichtung eine Bremse 39, die sowohl für den Rückwärtsbereich als auch für den Vorwärtsbereich dient und gleichzeitig auch im zweiten Vorwärtsfahrbereich als Abstützglied für das Abtriebsdrehmoment in geschlossenem Zustand dient. Innerhalb dem dritten und dem vierten Fahrbereich ist diese Bremse 39 geöffnet.

Bei Ausführung nach Figur 4 besitzt die zweite Planetengetriebeeinheit 305 zwei Kupplungen bzw. Bremsen 15 und 16. Bei dieser Ausführung dient die Kupplung bzw. Bremse 15 für den Anfahrbereich in Richtung "Vorwärts" und die Kupplung bzw. Bremse 16 für den Anfahrbereich in Richtung "Rückwärts".

Als Anfahreinrichtung kann bei diesen Ausführungen — zweite Planetengetriebeeinheit 305 — auch die erste Bereichskupplung 11 als Anfahrkupplung für den Vorwärtsbereich dienen.

Eine weitere Ausführungsform als Alternative für die Anfahreinrichtung kann bei Anwendung eines hydrostatischen Getriebes 40 ein zwischen die Primäreinheit, Hydrostateinheit A, und die Sekundäreinheit, Hydrostateinheit B, geschaltetes Bypaßventil 150 dienen, das als Bypaß zwischen Hoch- und Niederdruckleitung des Hydrostatgetriebes eingeschaltet ist. Im Anfahrzustand bei geschalteter erster Bereichskupplung arbeitet die erste verstellbare Hydrostateinheit A als Hydromotor und die zweite Hydrostateinheit B als Pumpe. Das Summierungsplanetengetriebe 4; 104, 204, 304, 404 ist, wie bereits beschrieben, so ausgelegt, daß in diesem Betriebszustand die zweite Hydrostateinheit B über das Summierungsplanetengetriebe mit einer Drehzahl angetrieben wird, die bei Verwendung eines Bypaßventils als Anfahreinrichtung wesentlich höher ist, als die Drehzahl der ersten Hydrostateinheit A. Durch die Bypaßfunktion des Bypaßventils 150 wird über die, zwischen die beiden Hochund Niederdruckleitungen des Hydrostatkreislaufes hergestellte Verbindung im Anfahrzustand ausgeglichen. Durch ein Regelsignal, wie bei Ausführung mit Anfahrkupplung bzw. Anfahrbremseinrichtung, wird auch bei dieser Ausführung das Bypaßventil innerhalb dem Anfahrvorgang kontinuierlich geregelt, entsprechend dem Wunsch bzw. dem Bedienungsvorgang des Fahrers.

Die Regelung des Bypaßventils ist mit der Motordrehzahl so ab gestimmt, daß ein Übertourender zweiten Hydrostateinheit B verhindert wird. Die Möglichkeiten der Regelungssignale sind unter Funktionsablauf näher beschrieben. Alle Bereichskupplungen 11, 12, 13, 14 bzw. 35, 36, 38, 66 werden im Synchronzustand geschaltet und können aus diesem Grund auch als formschlüssige Kupplung oder besser als form- plus kraftschlüssige Kupplung mit einer entsprechenden Abweisverzahnung, wie z.B. in Patentanmeldung P 37 00 813.7 vorgeschlagen, was den Vorteil einer besonders kompakten und kostengünstigen Kupplungseinrichtung für alle Bereichskupplungen bringt. Eine Kühlschmierung für die Bereichskupplungen kann aufgrund der nicht auftretenden Kupplungsleistung, wie bei sonstigen Automatgetrieben bekannt, entfallen. Es verbindet sich damit der Vorteil, daß alle Kupplungen, wie erwähnt, klein, kostengünstig und schleppmomentfrei ausgebildet werden können. Die für den Anfahrvorgang benutzte Kupplung bzw. Bremse 39 bzw. 15; 16 wird mit einer entsprechenden Kühlschmierung wegen der auftretenden Kupplungsleistung versehen, die nur während des Anfahrvorganges zweckmäßigerweise zugeschaltet ist. Gegenüber einem Getriebe mit einer eigenen Anfahrkupplung werden bei diesem Getriebesystem, bei dem die Anfahrkupplung im Getriebe integriert ist und gegebenenfalls als Bereichskupplung dient, Kosten und Bauraum gespart. Durch die spezielle Art dieses Verzweigungsgetriebesystems wird die Leistungskapazität gegenüber einem rein-hydrostatischen Getriebe, je nach Ausführungsform und Fahrzeugbedingungen, um mehr als das 15-fache (Leistungsvergrößerungsgrad gegenüber einem reinen Hydrostatgetriebe) vergrößert. Dadurch wird eine wesentliche Senkung des Leistungsgewichtes und des -volumens bzw. Senkung der Hydrostatgröße erzielt. Die hohen Drehzahlen, z.B. bei PKW, können technisch nur mit kleinen Hydrostateinheiten beherrscht werden. Das bedeutet, daß also die hohen Leistungsanforderungen größerer PKW's Systeme erfordern mit entsprechend hohem Leistungsvolumen, trotz kleiner Hydrostateinheiten, d.h. mit entsprechend großem Leistungsvergrößerungsgrad, der durch dieses Getriebesystem gegeben ist. Bei vorgenannten, bekannten Getriebesystemen dieser Art sind wesentlich größere Hydrostateinheiten erforderlich.

Das Summierungsplanetengetriebe 4; 104; 204; 304; 404; 504 kann verschiedenartig ausgebildet werden. Die Ausf. 304 u. 504 Fig.1u.2, wurden bereits beschrieben. Das Summierungsplanetengetriebe 4 besteht aus zwei planetengetriebestufen 8, 7, 10 und 17, 9 und 18. Die erste Welle 53 ist mit dem Steg 7 der ersten Planetengetriebestufe 8, 7, 10 verbunden und gleichzeitig mit dem Hohlrad 18 der zweiten Planetengetriebestufe verbunden. Die zweite Welle 19 des Summierungsplanetengetriebes ist mit beiden Sonnenrädern 8 und 17 verbunden. Die dritte Welle des Summierungsplanetengetriebes bildet der Steg 9 der zweiten Planetengetriebestufe und die vierte Welle 32 des Summierungsplanetengetriebes steht mit dem Hohlrad 10 der ersten Planetengetriebestufe in Verbindung. (Figur 4).

Das Summierungsplanetengetriebe 104, gemäß Figur 6, besitzt zwei ineinandergreifende Planetenräder 58 und 57. Wobei die erste Welle 53 des Summierungsplanetengetriebes mit einem Hohlrad 55 in Verbindung steht und in erste Planetenräder 57 eingreift. Die zweite Welle 19 des Summierungsplanetengetriebes ist mit dem Sonnenrad 54 verbunden, das ebenfalls in erste Planetenräder 57 greift. Die dritte Welle 31 des Summierungsplanetengetriebes bildet der Steg, der alle Planetenräder 57 und 58 trägt. Die vierte Welle 32 des Summierungsplanetengetriebes ist mit dem Sonnenrad 65, das mit zweite Planetenräder 58 kämmt, in Verbindung.

Das Summierungsplanetengetriebe 204, nach Ausführung Figur 7, ist ebenfalls mit ineinandergreifende planetenräder 64 und 63 ausgeführt, wobei die erste Welle 53 des Summierungsplanetengetriebes mit dem Steg 59 verbunden ist, der alle planetenräder 63 und 64 trägt. Die zweite Welle 19 steht mit einem Sonnenrad 60 in Verbindung, das in erste Planetenräder 64 eingreift. Die dritte Welle 31, die bei dieser Ausführungsform die äußere Abtriebswelle bildet, ist mit dem Hohlrad 62, das in zweite Planetenräder 63 greift, verbunden. Die Welle 32 als innere Abtriebswelle des Summierungsplanetengetriebes steht mit dem Hohlrad 61 in Verbindung, das mit erste Planetenräder 64 kämmt.

Eine weitere Ausführungsform des Summierungsplanetengetriebes 404 ist in Figur 3 dargestellt. Diese Ausführungsform besteht aus zwei Planetengetriebestufen 86, 87, 88 und 83, 84, 85. Die erste Welle 53 steht mit einem Hohlrad 88 der ersten Planetengetriebestufe in Verbindung; die zweite Welle 19 mit beiden Sonnenrädern 86 und 83. Die dritte Welle 31 bildet die Stegwelle 87 und 84 beider Planetengetriebestufen. Die vierte Welle 32 ist mit dem Hohlrad 85 der zweiten Planetengetriebestufe in Verbindung. Diese Ausführungsform bietet den Vorteil, daß eine weitere Abtriebswelle 99 möglich ist, die mit der dritten Welle 31 des Summierungsplanetengetriebes in Verbindung steht und über die vierte Welle 32 angeordnet ist. Diese zusätzliche Abtriebswelle 99 ist mit einer Welle der zweiten Planetengetriebeeinheit über eine Kupplung 101 verbindbar, wodurch ein zusätzlicher Rückwärtsfahrbereich geschaltet werden kann. Bei Anwendung dieser Summierungsplanetengetriebeeinheit 404 ist es also möglich, ein Getriebe mit vier Vorwärtsfahrbereichen und zwei Rückwärtsfahrbereichen zu schaffen. Wobei der erste Rückwärtsfahrbereich über die Kupplung 101 und der zweite Rückwärtsfahrbereich über die Kupplung 38 geschaltet ist bei geschlossener Bremse 39. (Figur 3).

Die zweite planetengetriebeeinheit 305 besteht aus einer ersten Planetengetriebestufe 20, 28, 29 und einer zweiten Planetengetriebestufe 25, 26, 27. Die erste Welle 48 der zweiten Planetengetriebeeinheit ist mit dem Sonnenrad 20 der ersten Planetengetriebestufe, die zweite Welle mit dem Sonnenrad 25 der zweiten Planetengetriebestufe, die dritte Welle mit dem Steg 28 der ersten planetengetriebestufe und dem Hohlrad 27 der zweiten Planetengetriebestufe, sowie mit dem Abtriebswelle 3 verbunden. (Figur 4).

Die zweite Planetengetriebeeinheit 205 nach Figur 3 bildet eine weitere Ausführungsform als Alternative zum Summierungsplanetengetriebe 105. Diese Ausführung besteht aus einem vierwelligen Planetengetriebe mit ineinandergreifende Planetenräder 93 und 94, wobei die erste Welle 48 mit einem Sonnenrad 92 in Verbindung steht, das in erste Planetenräder 93 greift und die zweite Welle 47 mit einem Sonnenrad 89, das mit zweite Planetenräder 94 kämmt. Die dritte Welle bildet das Hohlrad 91, das ebenfalls mit den zweiten Planetenrädern 94 zusammenarbeitet und mit der Abtriebswelle 3, sowie einer Kupplungswelle 49 verbunden ist. Die vierte elle 90 bildet den Steg für alle Planetenräder und ist mit einem Glied der Bremse 39 verbunden.

Durch die Planetengetriebebauweise, d.h. Summierungsplanetengetriebe 4, 104, 204, 304, 404, zweite Planetengetriebeeinheit 5, 105, 205, 305 sind beliebige Getriebebauformen möglich, die verschiedenen fahrzeugspezifischen Anforderungen gerecht werden. Für Fahrzeuge, z.B. PKW's mit längsangeordnetem Motor und Getriebe, können alle Getriebebaueinheiten, Hydrostatpaket 40, Summierungsplanetengetriebe 4, 104, 204, 304, 404, die zweite Planetengetriebeeinheit 5, 105, 205 auf einer gemeinsamen Getriebeachse angeordnet werden, wie in Figur 1, 2, 3, 7 und 10 dargestellt.

Für Fahrzeuge mit querangeordnetem Motor, z.B. Frontantrieb PKW oder auch für Schwerfahrzeuge, bietet sich an, die Getriebekomponenten, Hydrostatgetriebe 40 und die Verzweigungsgetriebeeinheiten, Summierungsplanetengetriebe, Bereichskupplungen und zweite bzw. dritte Planetengetriebeeinheit parallel zueinander versetzt anzuordnen, wie in Figur 8 dargestellt. Die Verbindung zwischen Antriebswelle 3 und der ersten Hydrostateinheit A wird über eine Stirnradstufe 51, die Verbindung zwischen Hydrostateinheit B und dem Summierungsplanetengetriebe über eine Stirnradstufe 52 hergestellt. Die Triebverbindungen zwischen Antriebswelle 3 und der ersten Welle 53 des Summierungsplanetengetriebes erfolgt über die Stirnradstufe 50. Bei dieser Ausführungsform ist es außerdem möglich, direkt über die erste Welle des Summierungsplanetengetriebes 53 anzutreiben durch eine Welle 67.

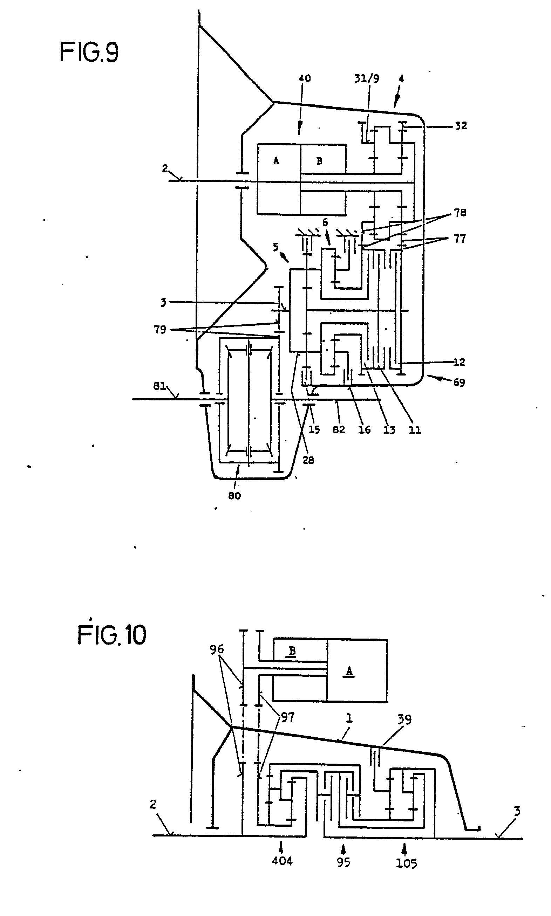

Wie in Figur 9 dargestellt, ist es desweiteren möglich, die zweite Planetengetriebeeinheit 105; 205; 305 und die Bereichskupplung 11, 12, 13, 14 auf einer gemeinsamen Achse versetzt zum Summierungsplanetengetriebe 4; 104; 204; 304; 404 und der Antriebswelle 2 anzuordnen, wobei die dritte Welle 31 und vierte Welle 32 des Summierungsplanetengetriebes 4; 104; 204; 304; 404; 504 über eine Stirnradstufe 78 bzw. 77 miteinander verbunden werden. Dies ist insbesondere für PKW-Getriebe in Frontbauweise sinnvoll, die eine kurze Baulänge, sowie einen gewissen Abstand von der Antriebswelle zur Getriebewelle fordern. Die Getriebeabtriebswelle 3 wird in diesem Ausführungsbeispiel zweckmäßigerweise mit einem Achsdifferential 80 über die Stirnradstufe 79 verbunden. Die beiden Achstriebwellen 81 und 82 treiben vorzugsweise direkt auf die Triebräder des Fahrzeugs.

Das Hydrostatgetriebe 40 kann bei diesem Verzweigungsgetriebe, wie bereits erwähnt, zu einer Baueinheit zusammengeschlossen und in einem gemeinsamen geräuschgedämpften Gehäuse untergebracht werden, wie ansich bekannt. Es verbindet sich dadurch der weitere Vorteil, daß geräuscherzeugende Schwingungen im, in sich geschlossenem Gehäuse des Hydrostatgetriebes abgebaut werden und die gesamte Baueinheit kurz und kompakt kostengünstiger hergestellt werden kann und die Modulbauweise ermöglicht. Ein weiterer wesentlicher Vorteil beruht darauf, daß aufgrund der erfindungsgemäßen Bauweise aller Einzelbaugruppen wesentliche Wirkungsgradvorteile dadurch geschaffen werden, daß die Druckleitungen des Hydrostaten kurz sind und sonst übliche Verbindungsleitungen eingespart werden können, wodurch darüberhinaus weitere Vorteile hinsichtlich Geräusch, Kosten und Bauraum erzielt werden. Das Hydrostatgetriebe 40 kann auch bei einer Längsgetriebeausführung parallel zur Antriebswelle 2 versetzt, z.B. nach oben, sinnvoll angeordnet werden für den Fall, daß in den dadurch gewonnenen Bauraum ein Achsdifferential mit querliegender Triebachse eingebaut werden kann, z.B. ür ein PKW-Getriebe mit Frontantrieb, jedoch längsangeordnetem Getriebe. Bei dieser Ausführungsform wird die erste Hydrostateinheit A über eine nicht dargestellte Stirnradstufe mit der Antriebswelle verbunden und die zweite Hydrostateinheit B ebenfalls mit einer nicht dargestellten Stirnradstufe mit der zweiten Welle 19 des Summierungsplanetengetriebes 4; 104; 204; 304; 404. Das in den Zeichnungen nicht dargestellte Achsdifferentialgetriebe wird bei dieser Ausführungsform über eine weitere nicht dargestellte Stirnradstufe zwischen der Abtriebswelle 3 und einer darunter liegenden parallel zur Antriebswelle angeordneten Ritzelwelle verbunden.

Mit den Grundbaueinheiten, Hydrostatgetriebe 40, Umschlingungsgetriebe 140, Summierungsplanetengetriebe 4; 104; 204; 304; 404; 504, der zweiten Planetengetriebeeinheit 105; 205; 305; 405, sowie den Bereichskupplungen 69 lassen sich also verschiedene Getriebekombinationen bzw. Bauformen nach Art einer Modulbauweise verwirklichen.

Funktionsablauf (Ausführung Figur 1)

Im Anfahrzustand wird bei vorgewählter Fahrtrichtung "Vorwärts" und getretener Bremse die erste Bereichskupplung 35 geschlossen und damit die dritte Welle 31 des Summierungsplanetengetriebes mit der zweiten Planetengetriebeeinheit 105 verbunden. Die vierte Welle 42 der zweiten Planetengetriebeeinheit 105 wird entsprechend der Übersetzung, was einer gewissen Mindestgeschwindigkeit X entspricht, lastlos angetrieben bei stehender Abtriebswelle 3. Zum Anfahren wird nun die Kupplung bzw. Bremse 39 allmählich geschlossen. Dies geschieht durch ein Signal, das entweder durch Loslassen des Bremspedals oder durch ein Antriebsdrehzahlsignal oder durch die Kombination beider Signale ausgelöst wird. Es ist auch möglich, durch Loslassen des Bremspedals über die Steuerund Regeleinrichtung gleichzeitig die Motorregelung so zu beeinflussen, daß entsprechend dem jeweils auftretenden Abtriebsdrehmoment automatisch die Motordrehzahl angehoben wird, entsprechend der Motordrehmomentcharakteristik, indem z.B. aus einem Signal der Drehzahldrückung infolge der Anfahrzugkraft die Kraftstoffzufuhr zum Motor entsprechend angehoben wird. Als Alternative zur Anfahreinrichtung über die Kupplung kann auch das bereits beschriebene Bypaßventil 150 dienen, wobei der Schließvorgang dieses Ventils zur Überbrückung des ersten Übersetzungsbereiches über gleiche Signale wie beim Anfahren über eine Kupplung gesteuert bzw. geregelt wird. Bei beiden Anfahreinrichtungen ist ein weicher kontinuierlicher Anfahrvorgang erzielbar. Auch ein lastabhängiges Signal, z.B. aus dem Hochdruck des Hydrostatgetriebes kann die Anfahrregelung derart beeinflussen, daß eine gewisse Maximalzugkraft bzw. Maximalbelastungswerte des Getriebes nicht überschritten werden. Sobald die Kupplung bzw. Bremse 39 oder gegebenenfalls das Bypaßventil geschlossen ist, hat die Abtriebswelle 3 eine Drehzahl angenommen, die dem Übersetzungspunkt "X" d.h. der einer Mindestgeschwindigkeit des Fahrzeugs entspricht. Die Hydrostateinheit A ist hierbei noch auf seinem maximalen negativen Verstellwert ausgeregelt. Der Hydrostat 40 wird nun von seiner negativen Endverstellung zurückgeregelt auf Null und darüber hinaus bis zu seiner maximalen positiven Endstellung bzw. bis Ende des ersten Schaltbereiches. An diesem Punkt haben alle Glieder des Summierungsplanetengetriebes 4; 104; 204; 304; 404 Synchronlauf erreicht. Die vierte Welle 32 des Summierungsplanetengetriebes hat in diesem Zustand auch Synchronlauf mit der ersten Welle 31 des Summierungsplanetengetriebes, sowie der ersten Welle 48 der zweiten Planetengetriebeeinheit erreicht, wonach zum Schalten in den zweiten Bereich die Kupplung 36 geschlossen und die Verbindung der vierten Welle 32 des Summierungsplanetengetriebes mit der ersten Welle 48 der zweiten Planetengetriebeeinheit hergestellt wird. Gleichzeitig wird die erste Bereichskupplung 35 geöffnet, womit der Schaltvorgang vom ersten in den zweiten Bereich abgeschlossen ist. Der Hydrostat wird nun wiederum in seine Gegenrichtung verstellt bis zu seiner negativen Endverstellung am Ende des zweiten Schaltbereiches. Beim Schalten in den dritten Schaltbereich hat die dritte Welle 49 und die Abtriebswelle 3 Gleichlauf mit der dritten Welle 31 des Summierungsplanetengetriebes erreicht, so daß diese Welle durch Schließen der Kupplung 66 mit der ersten Welle 31 verbunden werden kann. Die Kupplung 36 bleibt innerhalb dem dritten Bereich geschlossen und die Bremse bzw. Kupplung 39 wird geöffnet, so daß der Leistungsfluß über die Welle 31 und die Welle 48 auf die Abtriebswelle erfolgen kann. Der Hydrostat wird nun wiederum bis zu seiner anderen Endstellung durchgeregelt bis Erreichen des vierten Schaltpunktes nach Ende des dritten Fahrbereiches. An diesem Betriebspunkt haben alle Glieder des Summie-

rungsplanetengetriebes, sowie der zweiten Planetengetriebeeinheit Synchronlauf erreicht. Beim Schließen der vierten Bereichskupplung 38 bleibt die Kupplung 36 geschlossen und die Kupplung 66 wird geöffnet. Die im Summierungsplanetengetriebe 304 aufsummierte Leistung wird nun über die vierte Welle 32 des Summierungsplanetengetriebes über zwei Kupplungen 36 und 38 und den beiden Wellen 48 und 47 der zweiten Planetengetriebeeinheit in blockgeschaltetem Zustand über die zweite Planetengetriebeeinheit 105 auf die Abtriebswelle 3 übertragen.

Der erwähnte Synchronlauf der Kupplungselemente beinhaltet Ab weichungen vom absoluten Synchronlaufg der z.B. durch Drehzahlschlupf des Hydrostaten bzw. des Umschlingungsgetriebes bedingt ist. Im Hinblick auf optimale Schaltqualität wird zweckmäßigerweise bei anspruchsvollen Anwendungen lastabhängig der Schaltpunkt korrigiert.

Bei Anwendung im PKW oder allgemein bei Straßenfahrzeu en kann der vierte Schaltbereich ausschließlich als Over-drive-Bereich genutzt werden.

Die Kupplungsmomente aller Bereichskupplungen sind relativ niedrig, da die hohen Abtriebsdrehmomente der Abtriebswelle 3 durch die zweite Planetengetriebeeinheit in den unteren Fahrbereichen — Bereich 1 — Bereich 2 — stark untersetzt werden, was zum Vorteil hat, daß die Bereichskupplungen klein und kostengünstig ausgelegt werden können.

Ein, zwischen die Hydrostateinheiten A und B geschaltetes Bypaßventil ist ansich bekannt, z.B. in der DE-C-27 58 659. Hierbei hat dieses Ventil jedoch die Aufgabe, Hydrostatverspannungen zu verhindern, wenn zwei Bereichskupplungen geschaltet sind, um an dem entsprechenden Übersetzungspunkt den Hydrostat lastlos zu setzen. Andere bekannte Bypaßventile haben beispielsweise die Aufgabe, bei Fahrzeugstillstand bei Regelstellung "Null" eventuelle Regelungenauigkeiten auszugleichen. Diese Bypaßeinrichtungen berühren nicht den Erfindungsgegenstand.

Die im Getriebe integrierte Anfahreinrichtung als Bremse 39 hat den Vorteil, daß eine Anfahrkupplung zwischen Motor und Getriebe entfallen kann, wodurch wesentliche Kosten und Bauraum gespart werden.

Anstelle des stufenlosen Wandlers, in Form eines Umschlingungsgetriebes 140, können auch beliebige andere stufenlose Wandlereinrichtungen, wie z.B. ein Reibradgetriebe Verwendung finden.

Ein besonderer Vorteil des Getriebesystems beruht darauf, daß alle Kupplungen bzw. Schalteinrichtungen zwischen den beiden Planetengetriebeeinheiten — Summierungsplanetengetriebe und der zweiten Planetengetriebeeinheit — angeordnet werden können, was die erwähnte Modulbauweise erlaubt und kosten- und bauraumgünstige Ausführung der einzelnen Bauelemente ermöglicht.

Zur Schaltoptimierung ist, wie ansich bekannt, die Kupplungssteuereinrichtung so ausgelegt, daß eine kurzzeitige Kupplungsüberschneidung gegeben ist und daß das Öffnungssignal der zuvor geschalteten Kupplung aus dem Drucksignal des Kupplungsdruckes der Folgekupplung resultiert. Das Schaltsignal kann auf bekannte Art auf elektrischem oder/und hydraulischem Weg übertragen werden.

Bezugszeichen
  1 Gehäuse.
  2 Antriebswelle.
  3 Abtriebswelle.
  4 Summierungsplanetengetriebe.
  5 2. Planetengetriebeeinheit.
  6 3. Planetengetriebeeinheit.
  7 Steg.
  8 Sonnenrad.
  9 Steg 1. Schaltwelle.
  10 Hohlrad 2. Schaltwelle.
  11 1. Bereichskupplung.
  12 2. Bereichskupplung.
  13 3. Bereichskupplung.
  14 4. Bereichskupplung.
  15 Kupplung bzw. Bremse für Anfahrbereich.
  16 Kupplung Rückwärtsbereich.
  17 Sonnenrad.
  18 Hohlrad.
  19 Welle.
  20 Sonnenrad.
  21 Kupplungsglied.
  22 Kupplungsglied.
  23 Kupplungsglied.
  24 Kupplungsglied.
  25 Sonnenrad.
  26 Steg.
  27 Hohlrad.
  28 Steg.
  29 Hohlrad.
  30
  31 Welle 3. Welle d.S.Pl.Getr.
  32 Welle 4. Welle des Summierungsplänetengetr.
  33
  34
  35 Kupplung 1. + 3. Bereich.
  36 Kupplung 2. + 4. Bereich.
  37 Kupplung 3. Bereich.
  38 Kupplung Rückwärtsbereich.
  39 Kupplung bzw. Bremse.
      1. + 2. + Rückwärtsbereich.
  40 Hydrostatgetriebe.
  41 Hohlrad,
  42 Steg = (4. Welle).
  43 Sonnenrad.
  44 Steg.
  45 Hohlrad.
  46 Sonnenrad.
  47 Welle = (2. Welle).
  48 Welle = (1. Welle).
  49 Welle = (3. Welle).
  50 Stirnradstufe.
  51 Stirnradstufe.
  52 Stirnradstufe.
  53 Welle.

54 Sonnenrad.
55 Hohlrad.
56 Steg.
57 Planetenrad.
58 Planetenrad.
59 Steg.
60 Sonnenrad.
61 Hohlrad.
62 Hohlrad.
63 Planetenrad.
64 Planetenrad.
65 Sonnenrad.
66 Kupplung.
67 Antriebswelle Fig. 6.
68 Antriebswelle.
69 Bereichskupplungen.
70
71 Sonnenrad.
72 Steg.
73 Hohlrad.
74 Hohlrad.
75 2. Planetenrad.
76 1. Planetenrad.
77 Stirnradstufe.
78 Stirnradstufe.
79 Stirnradstufe.
80 Achsdifferential.
81 Achstriebwelle.
82 Achstriebwelle.
83 Sonnenrad.
84 Steg.
85 Hohlrad.
86 Sonnenrad.
87 Steg.
88 Hohlrad.
89 Sonnenrad.
90 Steg.
91 Hohlrad.
92 Sonnenrad.
93 Planetenräder.
94 Planetenräder.
95 Kupplungspaket.
96 Stirnradstufe.
97 Stirnradstufe.
98 Kupplungspaket.
99 Welle.
101 Kupplung.
104 Summierungsplanetengetriebe.
204 Summierungsplanetengetriebe.
304 Summierungsplanetengetriebe.
404 Summierungsplanetengetriebe.
504 Summierungsplanetengetriebe.
105 2. Planetengetriebeeinheit.
205 2.  „
305 2.  „
405 2.  „
140 Umschlingungsgetriebe.
150 Bypaßventil.
120 Sonnenrad.
121 Steg.
122 Sonnenrad.
123 Sonnenrad.
124 Hohlrad.
125 Planetenrad.
126 Planetenrad.

127 Stirnradstufe.
128 Stirnradstufe.
129 Rückfahreinrichtung.
C = Primäreinheit.
D = Sekundäreinheit..

**Patentansprüche**

1. Stufenloses Verzweigungsgetriebe für Kraftfahrzeuge mit drei oder vier Vorwärtsfahrbereichen, bei dem alle Fahrbereiche mit Leistungsverzweigung arbeiten, bestehend aus einer ersten Hydrostateinheit (A) verstellbaren Volumens und einer zweiten Hydrostateinheit (B) vorzugsweise konstanten Volumens, einem wenigstens vierwelligen Summierungsplanetengetriebe (104, 204, 304; 404; 4) zur Aufsummierung der am Getriebeeingang in zwei Leistungszweige aufgeteilten Leistung und einer nachgeordneten zweiten Planetengetriebeeinheit (105; 205; 305; 405), wobei die Eingangswelle (2) mit der ersten Hydrostateinheit (A) und einer ersten Welle (53) des Summierungsplanetengetriebes ständig verbunden, die zweite Hydrostateinheit (B) mit einer zweiten Welle (19) des Summierungsplanetengetriebes ständig verbunden, und die dritte und vierte Welle (31, 32) des Summierungsplanetengetriebes über schaltbare Kupplungen (35, 36, 38, 66 bzw. 11, 12, 13, 14) mit der zweiten Planetengetriebeeinheit wechselweise verbindbar sowie eine Anfahreinrichtung zur Überbrückung des ersten Übersetzungsbereichs bis zu einem Übersetzungspunkt "X" vorgesehen ist, dadurch gekennzeichnet, daß
(a) die zweite Planetengetriebeeinheit (105; 205; 305) zum Schalten von wenigstens drei Vorwärtsfahrbereichen und einem Rückwärtsfahrbereich wenigstens vierwellig ausgebildet,
(b) oder die zweite Planetengetriebeeinheit (405) zum Schalten von wenigstens drei Vorwärtsfahrbereichen ohne integrierten Rückwärtsfahrbereich dreiwellig ausgebildet, und
(c) eine Welle (44; 91; 28) der zweiten Planetengetriebeeinheit (105; 205; 305; 405) ständig mit der Antriebswelle (3) verbunden ist.

2. Stufenloses Verzweigungsgetriebe für Kraftfahrzeuge mit wenigstens drei Vorwärtsfahrbereichen, bestehend aus einem aus einer Primäreinheit (C) und einer Sekundäreinheit (D) gebildeten stufenlosen mechanischen Wandler (140), der bevorzugt als Umschlingungsgetriebe ausgebildet ist, einem wenigstens vierwelligen Summierungsplanetengetriebe (504) zur Aufsummierung der am Getriebeeingang in zwei Leistungszweige aufgeteilten Leistung und einer nachgeordneten zweiten Planetengetriebeeinheit (105; 205; 305; 405), wobei die Eingangswelle (2) mit der Primäreinheit und einer ersten Welle (53) des Summierungsplanetengetriebes ständig verbunden ist und durch eine dritte und vierte Welle (31, 32) des Summierungsplanetengetriebes (504; 104; 204) über schaltbare Kupplungselemente bzw. Bereichsschaltungen (69; 95) eine Triebverbindung zwischen dem ersten und dem zweiten Planetengetriebe hergestellt wird, dadurch gekennzeichnet, daß

(a) die erste Welle (53) des Summierungsplanetengetriebes (504) ständig mit der Primäreinheit (C) des stufenlosen Wandlers (140) verbunden, und

(b) die dritte und vierte Welle (31, 32) des Summierungsplanetengetriebes (504) über Kupplungen (35, 36, 38, 66, 39 bzw. 11, 12, 13, 14, 15, 16) mit der zweiten Planetengetriebeeinheit (105; 205; 305; 405) wechselweise verbindbar ist.

3. Verzweigungsgetriebe nach einem der Ansprüche 1 oder 2, dadurch gekennzeichnet, daß eine im Getriebe integrierte Anfahreinrichtung in Form einer Kupplung bzw. Bremse (39; 15; 16) oder eines Bypaßventils (150) vorgesehen ist, mittels der der erste Übersetzungsbereich bis zu einem definierten Übersetzungspunkt "X", an dem die stufenlose Regelung beginnt, überbrückt wird.

4. Verzweigungsgetriebe nach einem der Ansprüche 1 oder 2, dadurch gekennzeichnet, daß als Anfahreinrichtung eine an sich bekannte Anfahrkupplung in Form einer Flüssigkeits- oder Reibungskupplung zwischen Motor und Getriebe vorgesehen ist, mit deren Hilfe der erste Fahrbereich bis zu einem definierten Übersetzungspunkt "X" überbrückt wird, an dem die stufenlose Regelung beginnt.

5. Verzweigungsgetriebe nach einem der Ansprüche 1 oder 2, dadurch gekennzeichnet, daß das Summierungsplanetengetriebe (104; 204; 304; 504) in an sich bekannter Weise mit ineinandergreifenden ersten Planetenrädern (57; 64; 76; 125) und zweiten Planetenrädern (58; 63; 75; 126) ausgebildet ist, bzw. daß das Summierungsplanetengetriebe (4) aus einer ersten Planetengetriebestufe (17, 9, 18) und einer zweiten Planetengetriebestufe (8, 7, 10) besteht.

6. Verzweigungsgetriebe nach einem der Ansprüche 1 bis 5, dadurch gekennzeichnet, daß die zweite Planetengetriebeeinheit (105) vierwellig ausgebildet ist, aus zwei Planetengetriebestufen (43, 42, 41; 46, 44, 45) besteht, und die Sonnenräder (43, 46) miteinander verbunden sind, und der Steg (44) der ersten Planetengetriebestufe mit dem Hohlrad (41) der zweiten Planetengetriebestufe verbunden ist, das Hohlrad (45) der ersten Planetengetriebestufe mit einer Kupplungswelle (48) in Verbindung steht, der Steg (42) mit einem Glied der Kupplung bzw. Bremse (39) verbunden ist, und der Steg (44) mit der Abtriebswelle (3) sowie dem Hohlrad (41) der zweiten Planetengetriebestufe ständig verbunden ist.

7. Verzweigungsgetriebe nach einem der Ansprüche 1 bis 6, dadurch gekennzeichnet, daß die zweite Planetengetriebeeinheit (305) aus zwei Planetengetriebestufen (5, 6) besteht, wobei die erste Welle (48) mit einem Sonnenrad (20) der ersten Planetengetriebestufe (5) verbunden ist, der Steg (28) der ersten Planetengetriebestufe mit der Abtriebswelle (3), dem Hohlrad (27) der zweiten Planetengetriebestufe (6) sowie einem Glied (23) der Kupplung (13) ständig verbunden ist, das Sonnenrad (25) der zweiten Planetengetriebestufe mit der dritten Welle (31) des Summierungsplanetengetriebes (4; 204) ständig verbunden ist, der Steg (26) der zweiten Planetengetriebestufe (6) mit einem Glied der Kupplung bzw. Bremse (16) verbunden ist, das Hohlrad (29) der ersten Planetengetriebestufe entweder fest mit dem Gehäuse gekoppelt ist (Fig. 8) oder mit einem Glied der Kupplung bzw. Bremse (15) in Verbindung steht (Fig. 4).

8. Verzweigungsgetriebe nach einem der Ansprüche 1 bis 7, dadurch gekennzeichnet, daß die zweite Planetengetriebeeinheit (205) aus ineinandergreifenden Planetenrädern (93, 94) besteht, wobei die erste Welle (48) über ein Sonnenrad (92) in erste Planetenräder (89) eingreift, die zweite Welle über ein Sonnenrad (89) in zweite Planetenräder (94), ein Hohlrad (91) ebenfalls mit den zweiten Planetenrädern (94) kämmt, das ständig mit der Abtriebswelle (3) verbunden ist, und der Steg (90) der beiden Planetenräder (93, 94) gleichzeitig mit einem Glied der Kupplung bzw. Bremse (39) verbunden ist.

9. Verzweigungsgetriebe nach einem der Ansprüche 1 bis 8, dadurch gekennzeichnet, daß das Summierungsplanetengetriebe (404) mit zwei Planetengetriebestufen (86, 87, 88, 83, 84, 85) versehen ist, wobei die erste Welle (53) mit dem Hohlrad (88) der ersten Planetengetriebestufe in Verbindung steht, die zweite Welle (19) mit den beiden Sonnenrädern (86, 83) beider Planetengetriebestufen verbunden ist, die dritte Welle (31) den Steg (87, 84) beider Planetengetriebestufen bildet und das Hohlrad (85) der zweiten Planetengetriebestufe mit der vierten Welle (32) in Triebverbindung steht, und gleichzeitig eine weitere Welle (99) vorgesehen ist, die ebenfalls mit den beiden Stegwellen (84, 87) der beiden Planetengetriebestufen verbunden ist, die als zusätzliche Kupplungswelle für eine weitere Ausführungsform des Getriebes dient, die über die Kupplung (101) mit der zweiten Welle (47) der zweiten Planetengetriebeeinheit (105; 205) zum Schalten eines Rückfahrbereichs verbindbar ist (Fig. 3).

10. Verzweigungsgetriebe nach einem der Ansprüche 1 bis 9, dadurch gekennzeichnet, daß

(a) im ersten Schaltbereich die dritte Welle (31) des Summierungsplanetengetriebes (304; 504; 404; 104) mit der ersten Welle (48) der zweiten Planetengetriebeeinheit durch eine Kupplung (35) verbunden, und der Steg (42; 90) der zweiten Planetengetriebeeinheit (105; 205) durch eine Kupplung bzw. Bremse (39) mit dem Gehäuse verbunden ist,

(b) im zweiten Schaltbereich die vierte Welle (32) des Summierungsplanetengetriebes (304; 504; 404; 104) mit der ersten Welle (48) der zweiten Planetengetriebeeinheit (105; 205) über eine Kupplung (36) verbunden ist, und der Steg (42; 90) der zweiten Planetengetriebeeinheit ebenfalls, wie im ersten Fahrbereich, über die Kupplung bzw. Bremse (39) mit dem Gehäuse in Verbindung bleibt,

(c) im dritten Fahrbereich die dritte Welle (31) des Summierungsplanetengetriebes (304; 504; 404; 104) mit der dritten Welle (49) der zweiten Planetengetriebeeinheit über eine Kupplung (66) gekoppelt ist, wobei die erste Welle (48) der zweiten Planetengetriebeeinheit (105, 205) mit der vierten Welle (32) des Summierungsplanetengetriebes über eine Kupplung (36), wie im zweiten Fahrbereich, verbunden bleibt,

(d) im vierten Fahrbereich die vierte Welle (32) des Summierungsplanetengetriebes mit der ersten Welle (48) und gleichzeitig mit der zweiten Welle (47) der zweiten Planetengetriebeeinheit (105, 205) über Kupplungen (36, 38) verbunden ist, und

(e) im Rückwärtsfahrbereich die vierte Welle (32) des Summierungsplanetengetriebes mit der zweiten Welle (47) der zweiten Planetengetriebeeinheit über eine Kupplung (38) gekoppelt ist, und gleichzeitig der Steg (42; 90) der zweiten Planetengetriebeeinheit über eine Kupplung bzw. Bremse (39) mit dem Gehäuse gekoppelt ist.

11. Verzweigungsgetriebe nach einem der Ansprüche 1 bis 10, dadurch gekennzeichnet, daß

(a) die dritte Welle (31) des Summierungsplanetengetriebes (4; 204) unmittelbar mit einem Glied in Form des Sonnenrads (25) der zweiten Planetengetriebeeinheit (305) verbunden,

(b) im ersten Schaltbereich die dritte Welle (31) des Summierungsplanetengetriebes (4, 204) mit der ersten Welle (48) der zweiten Planetengetriebeeinheit (305) über eine Kupplung (11) verbunden,

(c) im zweiten Fahrbereich die vierte Welle (32) des Summierungsplanetengetriebes (4, 204) ebenfalls mit der ersten Welle (48) der zweiten Planetengetriebeeinheit (305) gekoppelt ist,

(d) im dritten Fahrbereich die dritte Welle (31) des Summierungsplanetengetriebes über eine Kupplung (13) unmittelbar mit der Abtriebswelle in Triebverbindung steht, und

(e) im vierten Fahrbereich die vierte Welle (32) des Summierungsplanetengetriebes mit der Abtriebswelle über eine Kupplung (14) verbunden ist (Fig. 4).

12. Verzweigungsgetriebe nach einem der Ansprüche 1 bis 11, dadurch gekennzeichnet, daß alle Bereichskupplungen (11, 12, 13, 14 bzw. 35, 38, 66 bzw. 35, 36, 37, 38, 66) zu einem Kupplungspaket zusammengefaßt, und alternativ jeweils zwei Kupplungen (35, 66 bzw. 36, 38) übereinander angeordnet sind.

13. Verzweigungsgetriebe nach einem der Ansprüche 1 bis 12, dadurch gekennzeichnet, daß eine im Getriebe integrierte Anfahreinrichtung als Bremse bzw. Kupplung (39) vorgesehen ist, durch die ein erster, einer vorgegebenen Mindestgeschwindigkeit entsprechender Übersetzungsbereich "X" überbrückt wird, wobei die Kupplung entweder manuell vom Fahrer betätigt oder über eine Fahrzeugregelung, vorzugsweise eine elektronischen Regelung, angesteuert wird, und zwar derart, daß der Kupplungsdruck in Abhängigkeit eines oder mehrerer Regelsignale, z.B. aus dem Motordrehzahlsignal oder/und einem lastabhängigen Signal oder/und einem Signal aus der Betätigungseinrichtung des Fahrzeugs, moduliert wird.

14. Verzweigungsgetriebe nach einem der Ansprüche 1 bis 13, dadurch gekennzeichnet, daß eine im Getriebe integrierte Anfahreinrichtung vorgesehen ist, die als Bypaßventil (150) zwischen Hoch- und Niederdruckleitungen der Hydrostateinheiten (A, B) angeordnet ist, das durch ein oder mehrere Signale angesteuert wird, wodurch die Bypaßfunktion während des Anfahrvorgangs dosierbar ausgeschaltet wird, und das Steuer- bzw. Regelsignal bzw. ein Motordrehzahlsignal oder/und ein lastabhängiges Signal oder/und ein aus der Betätigungseinrichtung resultierendes Signal ist.

15. Verzweigungsgetriebe nach einem der Ansprüche 1 bis 14, dadurch gekennzeichnet, daß die Baueinheiten Hydrostatpaket (40) bzw. Umschlingungsgetriebe (104), Summierungsplanetengetriebe (4; 104; 204; 304; 404; 504) und Kupplungspaket (69; 95) sowie die zweite Planetengetriebeeinheit (105; 205; 305) jeweils kompakte, abgeschlossene Baueinheiten _ in Form einer Modulbauweise bilden, und alle Baueinheiten zueinander parallel versetzt angeordnet sind (Fig. 8, 9, 10).

16. Verzweigungsgetriebe nach einem der Ansprüche 1 bis 15, dadurch gekennzeichnet, daß die Hydrostateinheiten (A, B) in an sich bekannter Weise hintereinander angeordnet und in einem separaten Gehäuse geräuschgekapselt untergebracht und in beliebiger Form in verschiedenen Getriebeformen fahrzeugfreundlich angeordnet sind.

**Revendications**

1. Transmission continue à ramification pour véhicules à moteur à trois ou quatre régimes de marche avant dont chacun opère à ramification de puissance, comprenant une première unité hydrostatique (A) à volume variable et une deuxième unité hydrostatique (B) de préférence à volume invariable, un engrénage planétaire intégrant au moins à quatre arbres (104, 204, 304; 404; 4) pour l'intégration de la puissance distribuée dans deux branches de puissance à l'entrée de la transmission, et une deuxième unité engrénage planétaire (105; 205; 305; 405) en aval, l'arbre d'entrée (2) étant en raccord continue à ladite première unité hydrostatique (A) et à un premier arbre (53) dudit engrénage planétaire intégrant, ladite deuxième unité hydrostatique (B) étant en raccord continu à un deuxième arbre (19) dudit engrénage planétaire intégrant, et les troisième et quatrième arbres (31, 32) dudit engrénage planétaire intégrant étant pourvus pour un engrènement permanent, à tour de rôle, à ladite deuxième unité engrénage planétaire au moyen des embrayages (35, 36, 38, 66 ou 11, 12, 13, 14), ainsi qu'un mécanisme de démarrage pour le pontage du premier régime de rapport jusqu'à un point de rapport "X", caractérisée en ce que

(a) ladite deuxième unité engrénage planétaire (105; 205; 305) est configurée pour le changement d'au moins trois régimes de marche avant et un régime de marche en arrière, en présentant au moins quatre arbres,

(b) ou ladite deuxième unité engrénage planétaire (405) est configurée pour le changement d'au moins trois régimes de marche avant, sans un régime de marche en arrière intégré, en présentant trois arbres, et

(c) qu'un arbre (44; 91; 28) de ladite deuxième unité engrénage planétaire (105; 205; 305; 405) est en raccord continu à l'abre moteur (3).

2. Transmission continue à ramification pour véhicules à moteur à au moins trois régimes de marche avant, comprenante un convertisseur mécanique (140) continu formé d'une unité primaire (C) et d'une unité secondaire (D), de préférence un convertisseur sous forme d'un engrénage du type d'enroulement, et comprenante un engrénage planétaire intégrant (504) à au moins quatre arbres pour l'intégration de la puissance distribuée dans deux branches de puissance à l'entrée de la transmission, ainsi qu'une deuxième unité engrénage planétaire en aval (105; 205; 305; 405), l'arbre d'entrée (2) étant en raccord continu à ladite unité primaire et un premier arbre (53) dudit engrénage planétaire intégrant pendant qu'un troisième et un quatrième arbre (31, 32) dudit engrénage planétaire intégrant (504; 104; 204) peut établir un raccord d'actionnement entre le premier et le deuxième engrénage planétaire, au moyen des éléments embrayeurs ou commutateurs de régime (69; 95), caractérisée en ce

(a) le premier arbre (53) dudit engrénage planétaire intégrant (504) est en raccord continu à ladite unité primaire (C) dudit convertisseur continu (140), et

(b) le troisième et le quatrième arbre (31, 32) dudit engrénage planétaire intégrant (504) sont pourvus pour le raccord, à tour de rôle, à ladite unité engrénage planétaire (105; 205; 305; 405) au moyen d'accouplement (35, 36, 38, 66, 39 ou 11, 12, 13, 14, 15, 16).

3. Transmission à ramification selon quelconque des Revendications 1 ou 2, caractérisée en ce qu'un dispositif de démarrage sous forme d'un dispositif d'accouplement ou d'un frein (39; 15; 16) ou une soupape de dérivation (150) est pourvu pour le pontage d'un premier régime de rapport jusqu'à un point de rapport "X" défini auquel commence le réglage continu.

4. Transmission à ramification selon quelconque des Revendications 1 ou 2, caractérisée en ce qu'un accouplement de démarrage connu en soi sous forme d'un dispositif d'accouplement hydraulique ou à friction est pourvu qui fait fonction d'un dispositif de démarrage entre le moteur et la transmission et sert au pontage du premier régime de marche jusqu'à un point de rapport "X" défini auquel commence le réglage continu.

5. Transmission à ramification selon quelconque des Revendications 1 ou 2, caractérisée en ce que ledit engrénage planétaire intégrant (104; 204; 304; 504) est réalisé, d'une façon connue en soi, aux premiers pignons satellites s'engrenants (57; 64; 76; 125) et deuxièmes pignons satellites (58; 63: 744; 126) ou que ledit engrénage planétaire intégrant (4) comprend un premier étage d'engrénage planétaire (17, 9, 18) et un deuxième étage d'engrénage planétaire (8, 7, 10).

6. Transmission à ramification selon quelconque des Revendications 1 à 5, caractérisée en ce que ladite deuxième unité engrénage planétaire (105) est réalisée à quatre arbres et comprend deux étages d'engrénage planétaire (43, 42, 41; 46, 44, 45), et en ce que les roues solaires (43, 46) sont reliées l'une à l'autre pendant que la traverse (44) dudit premier étage engrénage planétaire est reliée à la couronne de train planétaire (41) dudit deuxième étage engrénage planétaire et la couronne de train planétaire (45) dudit premier étage d'engrénage planétaire est raccordée à l'abre d'accouplement (48), la traversée (42) étant reliée à un élément d'accouplement ou de frein (39) et la traversée (44) étant en raccord continu à l'arbre de sortie (3) ainsi qu'à ladite couronne de train planétaire (41) dudit deuxième étage d'engrénage planétaire.

7. Transmission à ramification selon quelconque des Revendications 1 à 6, caractérisée en ce que ladite unité engrénage planétaire (305) comprend deux étage d'engrénage planétaire (5, 6), le premier arbre (48) étant relié à une roue solaire (20) dudit premier étage d'engrénage planétaire (5), la traverse (28) dudit premier étage d'engrénage planétaire étant en raccord continu à l'arbre de sortie (3), à la couronne de train planétaire (27) dudit deuxième étage d'engrénage planétaire (6) ainsi qu'à un élément (23) de l'accouplement (13), pendant que la roue solaire (25) dudit deuxième étage d'engrénage planétaire est en raccord continu au troisième arbre (31) dudit engrénage planétaire intégrant (4; 204), la traverse (26) dudit deuxième étage d'engrénage planétaire (6) est relié à un élément d'accouplement ou de frein (16), et la couronne de train planétaire (29) dudit premier étage d'engrénage planétaire est soit acouplée rigidement au carter (Fig. 8) soit relié à un élément d'accouplement ou de frein (15) (Fig. 4).

8. Transmission à ramification selon quelconque des Revendications 1 à 7, caractérisée en ce que ladite deuxième unité engrénage planétaire (205) est composée par des pignons satellites s'engrenants (93, 94), le premier arbre (48) engrenant dans des premiers pignons satellites (39) par une roue solaire (92), le deuxième arbre engrenant dans des deuxièmes pignons satellites (94) par une roue solaire (89), une couronne de train planétaire (91) engrenant de même dans desdits deuxièmes pignons planétaires (94) et étant en raccord continu à l'arbre de sortie (3), pendant que la traverse (90) desdits deux pignons satellites (93, 94) sont reliés en même temps à un élément d'accouplement ou de frein (39).

9. Transmission à ramification selon quelconque des Revendications 1 à 8, caractérisée en ce que ledit engrénage planétaire intégrant (404) est pourvu de deux étages engrénages planétaires (86, 87, 88, 83, 84, 85), le premier arbre (53) étant relié à la couronne de train planétaire (88) dudit premier étage d'engrénage planétaire, le deuxième arbre (19) étant relié auxdites deux roues solaires (86, 83) desdits deux étages d'engrénage planétaire, et en ce que le troisième arbre (31) forme la traverse (87, 84) desdits deux étages d'engrénage planétaire et que ladite couronne de train planétaire (85) dudit deuxième étage d'engrénage planétaire est en raccord d'actionnement avec le quatrième arbre (32), pendant qu'à même temps un arbre supplémentaire (99) est pourvu qui est aussi relié aux deux arbres de traverse (84, 87) desdits deux étages d'engrénage planétaire et sert comme arbre d'accouplement additionnel pour une autre réalisation de la transmission qui se peut accoupler audit deuxième arbre (47) de ladite deuxième unité engrénage planétaire (105; 205), au moyen de l'accouplement (101), pour changer la vitesse d'un régime de marche en arrière (Fig. 3).

10. Transmission à ramification selon quelconque des Revendications 1 à 9, caractérisée en ce que

(a) au premier régime de changement, ledit troisième arbre (31) dudit engrénage planétaire intégrant (304; 504; 404; 104) est relié au premier arbre (48) de ladite deuxième unité engrénage planétaire par un accouplement (35), et en ce que la traverse (42; 90) de ladite deuxième unité engrénage planétaire (105; 205) est raccordée au carter par un accouplement ou frein (39),

(b) au deuxième régime de changement, ledit quatrième arbre (32) dudit engrénage planétaire intégrant (304; 504; 404; 104) est relié au premier arbre (48) de ladite deuxième unité engrénage planétaire (105; 205) par un accouplement (36), et en ce que la traverse (42; 90) de ladite unité engrénage planétaire reste de même en raccord avec le carter par l'accouplement ou le frein (39, comme cela s'applique au premier régime de marche,

(c) au troisième régime de marche, ledit troisième arbre (31) dudit engrénage planétaire intégrant (304; 504; 404; 104) est relié au troisième arbre (49) de ladite deuxième unité engrénage planétaire par un accouplement (66), ledit premier arbre (48) de ladite deuxième unité engrénage planétaire (105, 205) restant en raccord avec le quatrième arbre (32) dudit engrénage planétaire intégrant par un accouplement (36), comme cela s'applique au deuxième régime de marche,

(d) au quatrième régime de marche, ledit quatrième arbre (32) dudit engrénage planétaire intégrant est relié au premier arbre (48) et en même temps au deuxième arbre (47) de ladite deuxième unité engrénage planétaire (105, 205) par des dispositifs d'accouplement (36, 38), et

(e) qu'au régime de marche en arrière, ledit quatrième arbre (32) dudit engrénage planétaire intégrant est relié au deuxième arbre (47) de ladite deuxième unité engrénage planétaire par un accouplement (38) pendant qu'en même temps ladite traverse (42; 90) de ladite deuxième unité engrénage planétaire est accouplée au carter par un dispositif d'accouplement ou de frein (39).

11. Transmission à ramification selon quelconque des Revendications 1 à 10, caractérisée en ce que

(a) ledit troisième arbre (31 dudit engrénage planétaire intégrant (4; 204) est directement relié à un élément sous forme de ladite roue solaire (25) de ladite deuxième unité engrénage planétaire (305),

(b) au premier régime de changement, ledit troisième arbre (31) dudit engrénage planétaire intégrant (4, 204) est relié avec ledit premier arbre (48) de ladite deuxième unité engrénage planétaire (305) par un dispositif d'accouplement (11),

(c) au deuxième régime de marche, ledit quatrième arbre (32) dudit engrénage planétaire intégrant (4, 204) est de même accouplé au premier arbre (48) de ladite deuxième unité engrénage planétaire (305),

(d) au troisième régime de marche, ledit troisième arbre (31) dudit engrénage planétaire intégrant se trouve en raccord d'actionnement directement avec l'arbre de sortie, par un dispositif d'accouplement (13),

(e) au quatrième régime de marche, ledit quatrième arbre (32) dudit engrénage pianétaire intègrant est relié avec l'arbre de sortie par un dispositif d'accouplement (14) (Fig. 4).

12. Transmission à ramification selon quelconque des Revendications 1 à 11, caractérisée en ce que tous les dispositifs d'accouplement en régime (11, 12, 13, 14 ou 35, 38, 66 ou 35, 36, 37, 38, 66) sont combinéss à former un seul accouplement paqueté et en ce qu'alternativement deux dispositifs d'accouplement (35, 66 ou 36, 38) respectifs sont superposés l'un sur l'autre.

13. Transmission à ramification selon quelconque des Revendications 1 à 12, caractérisée en ce qu'un dispositif de démarrage intégré dans la transmission est pourvu comme frein ou dispositif d'accoupiement (39), au moyen duquel se fait le pontage d'un premier régime de rapport "X" correspondant à une vitesse minimale définie, ledit dispositif d'accouplement étant actionné soit à main par le conducteur soit par un système régulateur de véhicule, de préférence du type électronique, d'une façon que la pression d'accouplement soit modulée en fonction d'un ou plusieurs signaux d'asservissement, par exemple à la base du signal représentatif du régime moteur ou/et un signal en fonction de la charge ou/et un signal provenant du dispositif de commande du véhicule.

14. Transmission à ramification selon quelconque des Revendications 1 à 13, caractérisée en ce qu'un dispositif de démarrage intégré dans la transmission est pourvu qui est disposée comme soupape de dérivation (150) entre des conduites à haute pression et des conduites à basse pression desdites unités hydrostatiques (A, B), qui est commandée par un ou plusieurs signaux afin que la fonction de dérivation soit mise hors service d'une façon réglable pendant l'opération de démarrage, et en ce que ledit signal de commande ou de réglage est un signal représentatif du régime moteur ou/et un signal en fonction de la charge ou/et un signal résultant du dispositif de commande.

15. Transmission à ramification selon quelconque des Revendications 1 à 14, caractérisée en ce que chacune des unités de construction du paquet hydrostatique (40) ou d'engrénage du type d'enroulement (104), de l'engrénage planétaire intégrant (4; 104; 204; 304; 404; 504) et du paquet d'accouplement (69; 95) ainsi que de la deuxième unité engrénage planétaire (105; 205; 305) constitue une unité modulaire autonome sous forme d'une construction modulaire, et en ce que toutes les unités de construction sont disposées en déport parallèle l'une relativement à l'autre (Fig. 8, 9, 10).

16. Transmission à ramification selon quelconque des Revendications 1 à 15, caractérisée en ce que lesdites unités hydrostatiques (A, B) sont disposées, d'une façon connue en soi, l'une derrière l'autre et sont logées dans un carter séparé à capsule silencieuse, et sont disposées, sous forme quelconque, dans des diverses constructions d'engrénage d'une façon pratique pour le véhicule.

## Claims

1. Continuous speed-change branched gear for motor vehicles provided with three or four forward speed ranges, wherein all speed ranges operate on power branching, comprising a first hydrostatic unit (A) of an adjustable volume and a second hydrostatic unit (B) of a preferably constant volume, a compounding planetary gear (104, 204, 304; 404; 4) with at least four shafts for compounding the power split at the gear input into two power branches, and a succeeding second planetary gear unit (105; 205; 305; 405), with the input shaft (2) being permanently connected with said first hydrostatic unit (A) and a first shaft (53) of said compounding planetary gear, said second hydrostatic unit (B) being permanently connected to a second shaft (19) of said compounding planetary gear, and said third and fourth shafts (31, 32) of said compounding planetary gear being provided for alternating connection to said second planetary gear unit via shiftable clutches (35, 36, 38, 66 or 11, 12, 13, 14), and wherein starting means is provided for bridging over the first range of ratios up to a stepping point "X", characterized in that

(a) the second planetary gear unit (105; 205; 305) is designed to comprise at least four shafts for switching at least three forward and one reverse speed ranges,

(b) or that the second planetary gear unit (405) is designed to comprise at least three shafts for switching at least three forward speed ranges without an integrated reverse speed range, and

(c) one shaft (44; 91; 28) of said second planetary gear unit (105; 205; 305; 405) is permanently connected to said driving shaft (3).

2. Continuous speed-change branched gear for motor vehicles having at least three forward speed ranges, comprising a continuous mechanical converter (140) preferably designed as a wrap-around gear and consisting of a primary unit (C) and a secondary unit (D), as well as a compounding planetary gear (504) including at least four shafts for compounding the power split at the gear input into two power branches, and a succeeding second planetary gear unit (105; 205; 305; 405), with the input shaft (2) being permanently connected to said primary unit and a first shaft (53) of said compounding planetary gear, with provisions to establish a driving connection between said first and said second planetary gear by means of a third and fourth shaft (31, 32) of said compounding planetary gear (504; 104; 204) through shiftable clutch elements or range switches (69; 95), characterized in that

(a) the first shaft (53) of said compounding planetary gear (504) is permanently connected to the primary unit (C) of said continuous converter (140), and

(b) that the third and fourth shafts (31, 32) of said compounding planetary gear (504) may be connected in alternation to said second planetary gear unit (105; 205; 305; 405) through clutches (35, 36, 38, 66, 39 or 11, 12, 13, 14, 15, 16).

3. Branched gear according to any of Claims 1 or 2, characterized in that a starting means in the form of a clutch or brake (39; 15; 16) of a by-pass valve (150) integrated in the gear is provided so as to bridge over the first range of ratios up to a defined stepping point "X" where the continuous control action begins.

4. Branched gear according to any of Claims 1 or 2, characterized in that a starting clutch in the form of a hydraulic or a friction disc clutch, which is known per se, is provided between the engine and the gear as means for bridging over the first speed range up to a defined stepping point "X" where the continuous control action begins.

5. Branched gear according to any of Claims 1 or 2, characterized in that said compounding planetary gear (104; 204; 304; 504) is designed, in a manner known per se, to have intermeshing first planetary pinions (57; 64; 76; 125) and second planetary pinions (58; 63; 75; 126) or that said compounding planetary gear (4) consists of a first planetary gear stage (17. 9, 18) and a second planetary gear stage (8, 7, 10).

6. Branched gear according to any of Claims 1 to 5, characterized in that said second planetary gear unit (105) is of a four-shaft design, consists of two planetary gear stages (43, 42, 41; 46, 44, 45), and has sun wheels (43, 46) connected to each other, and that the crosspiece (44) of said first planetary gear stage is connected to the hollow wheel (41) of said second planetary gear stage, the hollow wheel (45) of said first planetary gear stage is connected to a clutch spindle (48), the crosspiece (42) is connected to a clutch or brake (39) member, and the crosspiece (44) is permanently connected to both the driven shaft (3) and the hollow wheel (41) of said second planetary gear stage.

7. Branched gear according to any of Claims 1 to 6, characterized in that said second planetary gear unit (305) consists of two planetary gear stages (5, 6), with the first shaft (48) being connected to a sun wheel (20) of said first planetary gear stage (5), the crosspiece (28) of said first planetary gear stage being permanently connected to the driven shaft (3), the hollow wheel (27) of said second planetary gear stage (6) as well as a member (23) of the clutch (13), that the sun wheel (25) of said second planetary gear stage is permanently connected to the third shaft (31) of said compounding planetary gear (4; 204), that the crosspiece (26) of said second planetary gear stage (6) is connected to a member of said clutch or brake (16), that the hollow wheel (29) of said first planetary gear stage is either fixedly coupled to the housing (Fig. 8) or connected to a member of said clutch or brake (15) (Fig. 4).

8. Branched gear according to any of Ciaims 1 to 7, characterized in that said second planetary gear unit (205) consists of intermeshing planetary pinions (93, 94), with said first shaft (48) engaging with first planetary pinions (89) through a sun wheel (92), with said second shaft being in engagement with second planetary pinions (94) through a sun wheel (89), a hollow wheel (91) also engaging into said second planetary pinions (94) and being permanently connected to said driven shaft (3), and that the crosspiece (90) of the two planetary pinions (93, 94) is connected at the same time to a member of said clutch or brake (39).

9. Branched gear according to any of Claims 1 to 8, characterized in that said compounding planetary gear (404) is provided with two planetary gear stages (86, 87, 88, 83, 84, 85), with the first shaft (53) being connected to the hollow wheel (88) of said first planetary gear stage, the second shaft (19) being connected to the two sun wheels (86, 83) of both planetary gear stages, the third shaft (31) constituting the crosspiece (87, 84) of both planetary gear stages, and the hollow wheel (85) of said second planetary gear stage being in driving connection with the fourth shaft (32), and that at the same time another shaft (99) is provided which is also connected to the two crosspiece shafts (84, 87) of the two planetary gear stages and serves as additional clutch spindle for another embodiment of the gear, which may be connected to the second shaft (47) of said second planetary gear unit (105; 205) for switching a reverse speed range (Fig. 3).

10. Branched gear according to any of Claims 1 to 9, characterized in that,

(a) in the first speed range the third shaft (31) of said compounding planetary gear (304; 504; 404; 104) is connected to the first shaft (48) of said second planetary gear unit through a clutch (35), and that the crosspiece (42; 90) of said second planetary gear unit (105; 205) is connected to the housing through a clutch or brake (39), respectively,

(b) in the second speed range the fourth shaft (32) of said compounding planetary gear (304; 504; 404; 104) is connected to the first shaft (48) of said second planetary gear unit (105; 205) through a clutch (36), and that the crosspiece (42; 90) of said second planetary gear unit also continues to be connected to the housing through said clutch or brake (39), respectively, like in the first speed range,

(c) in the third speed range the third shaft (31) of said compounding planetary gear (304; 504; 404; 104) is linked up with the third shaft (49) of said second planetary gear unit through a clutch (66), with the first shaft (48) of said second planetary gear unit (105, 205) remaining connected to the fourth shaft (32) of said compounding planetary gear through a clutch (36), like in the second speed range,

(d) in the fourth speed range the fourth shaft (32) of said compounding planetary gear is connected to the first shaft (48) and at the same time to the second shaft (47) of said second planetary gear unit (105, 205) through clutches (36, 38), and

(e) in the reverse speed range the fourth shaft (32) of said compounding planetary gear is linked up with the second shaft (47) of said second planetary gear unit through a clutch (38) while at the same time the crosspiece (42; 90) of said second planetary gear unit is linked up with the housing through a clutch or brake (39), respectively.

11. Branched gear according to any of Claims 1 to 10, characterized in that

(a) the third shaft (31) of said compounding planetary gear (4; 204) is connected directly to an element in the form of the sun wheel (25) of said second planetary gear unit (305),

(b) in the first speed range the third shaft (31) of said compounding planetary gear (4, 204) is connected to the first shaft (48) of said second planetary gear unit (305) through a clutch (11),

(c) in the second speed range the fourth shaft (32) of said compounding planetary gear (4, 204) is also linked up with the first shaft (48) of said second planetary gear unit (305),

(d) in the third speed range the third shaft (31) of said compounding planetary gear is in direct driving connection with the driven shaft through a clutch (13), and

(e) in the fourth speed range the fourth shaft (32) of said compounding planetary gear is connected to the driven shaft through a clutch (14) (Fig. 4).

12. Branched gear according to any of Claims 1 to 11, characterized in that all range clutches (11, 12, 13, 14 or 35, 38, 66 or 35, 36, 37, 38, 66, respectively) are combined to constituted a single clutch package, and that in an alternative two clutches at a time (35, 66 or 36, 38) are disposed in superimposed relationship.

13. Branched gear according to any of Claims 1 to 12, characterized in that a starting means integrated into the gear is provided in the form of a brake or clutch (39) and serves to bridge over a first range of ratios "X" corresponding to a predetermined minimum speed, with said clutch being either manually operated by the driver or being controlled through a vehicle control system, preferably an electronic control system, in a way that the clutch pressure will be modulated as a function of one or several control signals such as the engine speed signal or and a load-dependent signal or/and a signal transmitted from the vehicle operation means.

14. Branched gear according to any of Claims 1 to 13, characterized in that a starting means integrated into the gear is provided which is disposed as a by-pass valve (150) between highpressure and low-pressure lines of said hydrostatic units (A, B), which is controlled by one or several signals so as to switch off the by-pass function during the starting operation in a controllable manner, and that said control or feed-back control signal is an engine speed signal or/and a load-dependent signal or/and a signal resulting from the operation means.

15. Branched gear according to any of Claims 1 to 14, characterized in that each of the units hydrostatic package (40) or wrap-around gear (104), compounding planetary gear (4; 104; 204; 304; 404; 504) and clutch package (69; 95) as well as the second planetary gear unit (105; 205; 305) forms a compact self-contained structural unit in the form of a modular element, and that all the structural units are disposed in a mutually parallel-staggered relationship (Figs. 8, 9, 10).

16. Branched gear according to any of Claims 1 to 15, characterized in that said hydrostatic units (A, B) are disposed in tandem arrangement in a manner known per se, and are accomodated in a separate housing providing an anti-noise capsule, while they are arranged in an optional way with different gear forms in a vehicle-friendly manner.

FIG. 1

FIG. 2

# FIG. 3

# FIG. 4

FIG.5

FIG.6

FIG.7

FIG.8

FIG.9

FIG.10